# EUROPEAN PATENT APPLICATION

(11) **EP 4 498 546 A1**
(43) Date of publication of application: **29.01.2025**
(21) Application number: 23195949.5
(22) Date of filing: 07.09.2023
(51) Int. Cl.: H02G 3/14

(54) **MODULAR WALL ELECTRICAL DEVICE**

(30) Priority: 22.07.2023 CN 202310906307
(71) Applicant: Wenzhou Haotian Electric Co., Ltd., Wenzhou, Zhejiang 325000 (CN)
(72) Inventor: ZHANG, Jiren, Wenzhou, 325013 (CN)
(74) Representative: Balder IP Law, S.L.

(57) **Abstract**

Disclosed in the present application is modular wall electrical device, including a base and one or more replaceable electrical modules positioned on the base. In particular, the base includes a base frame and two transverse members and two longitudinal members installed on the base frame, the two longitudinal members are respectively connected to two ends of the transverse members, and the transverse member includes multiple module installation units.

## Description

### TECHNICAL FIELD

The present application relates to the field of wall electrical devices, and in particular, to a modular wall electrical device.

### BACKGROUND ART

Currently, in a room decoration, there are increasing requirements for the functionality of wall electrical devices. In addition to basic switches and sockets, sometimes the wall has to be equipped with functions such as voice control and delay lights. At present, for each type of product as required, it is provided by separate design and configuration.

Regarding the above relevant technologies, it is found that, various production lines have to be established to meet the diverse needs of users, and, when the market demand for various products changes, the scale of the various production lines also has to be adjusted, resulting in extreme high cost. Since the applicant is dedicated to and has rich experience in the development of a series of switch products, for example, those under the trade name of Sandasdon○,R, it starts to develop new switch products according to feedback from users, while addressing one of the above deficiencies.

### SUMMARY

In view of this, the present application provides a modular wall electrical device having a base and replaceable different electrical modules on the base so as to diverse needs of users while saving production line costs.

The present application provides a modular wall electrical device that adopts the following technical solution:
a modular wall electrical device including a base and one or more replaceable electrical modules positioned on the base.

By adopting the above technical solution, a user can freely combine electrical modules according to their own needs to form customized wall electrical devices. Due to the fact that only different numbers of electrical modules and individual electrical modules need to be produced and installed during the production process, fewer production lines can be used to meet more customized needs. At the same time, the cost of production line allocation is also lower.

Preferably, the base includes a base frame and two transverse and two longitudinal components installed on the base frame. The two longitudinal components are connected at two ends of the two transverse components, respectively, and the transverse components include multiple module installation units.

By adopting the above technical solution, the length direction of the horizontal component is changed to meet the needs of different module installation units.

Preferably, an installation slot is defined in a side of two side parts of the base frame installed with the transverse member facing a center of the base frame, the electrical module comprises a switch module, the switch module comprises a press switch, a press panel for finger pressing, and a touch member and a transmission component installed in the press panel, and two sides of the press switch are formed with installation blocks cooperating with the installation slots.

By adopting the above technical solution, when pressing the press panel, the press panel transmits power through the transmission component, and the transmitted power finally triggers the press switch through the touch member, achieving on/off control of the switch.

Preferably, the press panel comprises a panel body and a support edge positioned at two sides of the panel body and extending toward the base, two installation holes configured for installing the touch member are defined in the middle of two sides of the two support edges facing each other, two installation holes on a same support edge is distributed along a length direction of the press panel, first snap parts are symmetrically arranged along a centerline of a side of the panel body facing the base in a length direction, the touch member comprises an installation rod configured to be inserted into two installation holes in two supporting edges, one side of the installation rod is integrally formed with a touch plate, one side of the touch plate is formed with a snap bracket, a first snap-in groove is defined in a side of the snap bracket departing from the installation rod, an inner wall of the first snap-in groove departing from the touch plate acts as a snap-in wall, the snap-in wall tilts from the installation rod towards the touch plate, the transmission component includes a snap rod configured to be deformed and snapped into the first snap-in groove and rotated around the first snap-in groove, sides at two ends of the snap rod are formed with a transmission rod in cooperation with the first snap part, one end of the transmission rod departing from the snap rod is formed with an abutting plate, each of the module installation units is formed with two mating grooves facing the center of the base, and the abutting plate abuts against the mating groove.

By adopting the above technical solution, when operating the press panel, the press panel is subjected to force movement. At this time, due to the contact fit between the abutting plate and the mating groove, the transmission rod will be rotated around the mating point of the first snap part and the transmission rod, and drive the abutting plate to rotate during the rotation process. The switch is triggered by the abutting plate pressing press switch. Due to the fact that the abutting plate rotates around the installation hole during the triggering process, the angle between the abutting plate and the pressing panel gradually approaches a right angle during the rotation of the abutting plate. Therefore, at the beginning of the process of pressing the abutting plate, the abutting plate will quickly approach and trigger the press switch, allowing the switch to be quickly triggered by the pressing. After triggering by pressing the press switch, the angle between the abutting plate and the press panel has gradually approached a right angle. As the angle approaches the right angle, the movement speed of the abutting plate towards the direction of the press switch is slower, provided that the speed of the press panel remains unchanged. Therefore, the present technical solution can enable the operator to reach the switch stroke within a large range of press operation travel, without exceeding the over stroke protection of the press triggered switch.

Preferably, a limit protrusion is defined at a position between two installation holes on a same support edge, sides of the two installation holes departing from each other, and a side of the two installation holes facing the panel body, respectively.

Preferably, a guide slope is formed along the support edge on one side of each of the installation holes departing from the support panel.

Preferably, the first snap part includes a first reinforcing plate extending along a length direction of the panel body, and a first supporting plate integrally formed with the first reinforcing plate and extending outward along a width direction of the panel body, a first snap block is formed on one side of an end of the first supporting plate departing from the first reinforcing plate, the transmission rod is defined with a second snap-in groove in one side departing from the panel body, a bottom surface of the second snap-in groove is defined with a through hole, a width of the through hole is greater than a width of the first snap block, and there is a distance between the through hole and a side wall of the second snap-in groove, and the first snap block is snapped and fixed in the second snap-in groove after the first snap part on the panel body is passed through the through hole.

Preferably, a distance between a side of the abutting plate departing from the panel body and the panel body is less than a distance between a side of the transmission rod departing from the panel body and the panel body, and surfaces of the transmission rod and the abutting plate facing the panel body gradually tilts away from the panel body in a direction from the middle of the transmission rod to the abutting plate.

Preferably, each of the module installation unit is formed with a positioning groove located in the middle of two docking grooves, one side of the connecting rod departing from the snap rod is formed with an elastic abutting member, the elastic abutting member comprises a U-shaped elastic bendable part and an abutting part, and one side of the abutting part departing from the panel body is formed with a positioning block.

Preferably, it also includes a decorative panel connected to a base, wherein the longitudinal component is formed with multiple decorative fixing holes, each of the decorative fixing holes comprises adjacent square hole and oblong hole, a decorative fixing block is formed on one side of a spacing bar between the square hole and the oblong hole facing the square hole, a guide slope is formed on a side of the decorative fixing block facing the decorative panel, a decorative insertion column is formed on the decorative panel at positions corresponding to the square holes of the decorative fixing hole, and a decorative fixing groove is defined in a side of each of the decorative insertion columns and configured for fixing and cooperating with the decorative fixing block.

In summary, the present application can achieve at least one of the following beneficial technical effects.
1. A user can freely combine electrical modules according to their own needs to form customized wall electrical devices. As the production process only requires the production and installation of different numbers of electrical modules and individual electrical modules, fewer production lines can be used to meet more customized needs. At the same time, the cost of production line allocation is also lower.
2. When operating the press panel, the press panel is subjected to force movement, and, at this time, due to the abutting cooperation between the abutting plate and the mating groove, the transmission rod will rotate around the mating point of the first snap part and the transmission rod, and the touch plate will be driven to rotate, and the switch will be triggered through the touch plate pressing press switch.

### BRIEF DESCRIPTION OF THE DRAWINGS

FIG. 1 is a structural schematic diagram of a wall electrical device having different modules;
FIG. 2 is a partial structural schematic diagram of a wall electrical device using a switch module as an electrical module;
FIG. 3 is a structural schematic diagram of a decorative panel;
FIG. 4 is a structural schematic diagram of combined multiple electrical modules;
FIG. 5 is a structural schematic diagram of a press panel, a touch member and a transmission component in cooperation with each other;
FIG. 6 is a structural schematic diagram of a part of a supporting edge;
FIG. 7 is a structural schematic diagram of a press panel;
FIG. 8 is an enlarged view of a first snap part and a second snap part;
FIG. 9 is a structural schematic diagram of a touch member and a transmission component; and
FIG. 10 is an explosion schematic diagram of a touch member and a transmission component.

Listing of reference signs: 1. Base; 2. Decorative panel; 3. Electrical module; 4. Switch module; 5. Under frame; 6. Horizontal components; 7. Longitudinal components; 8. Installation slot; 9. Mating groove; 10. Positioning slot; 11. Decorative fixing holes; 12. Decorative fixing block; 13. Interference pressing block; 14. Decorative pillars; 15. Decorative fixing groove; 16. Installation block; 17. Press the press switch; 18. Touch member; 19. Transmission component; 20. Press panel; 21. Panel body; 22. Support edge; 23. Installation hole; 24. Limit protrusion; 25. First snap part; 26. Second snap part; 27. First reinforcing plate; 28. First support plate; 29. First snap block; 30. Second reinforcing plate; 31. Second support plate; 32. Second snap block; 33. Installation rod; 34. Touch plate; 35. Material saving groove; 36. Cross reinforcement bracket; 37. Snap bracket; 38. First snap-in groove; 39. Snap rod; 40. Transmission rod; 41. Abutting plate; 42. Guide protrusion; 43. Second snap-in groove; 44. Through hole; 45. Positioning rod; 46. Elastic abutting member; 47. Elastic bendable part; and 48. Abutting part.

### DETAILED DESCRIPTION

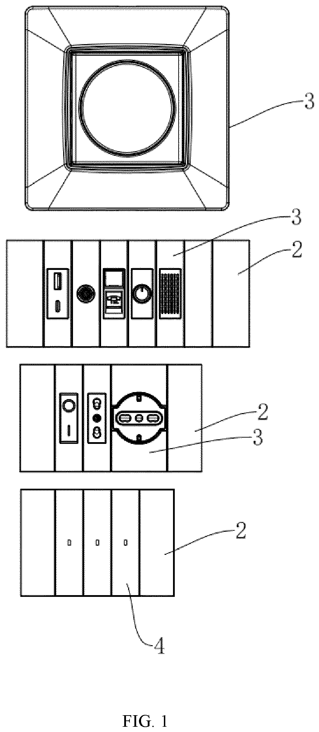

The present application will be further explained in details in conjunction with FIGs. 1-10.

In an embodiment of the present application, discloses a modular wall electrical device is disclosed.

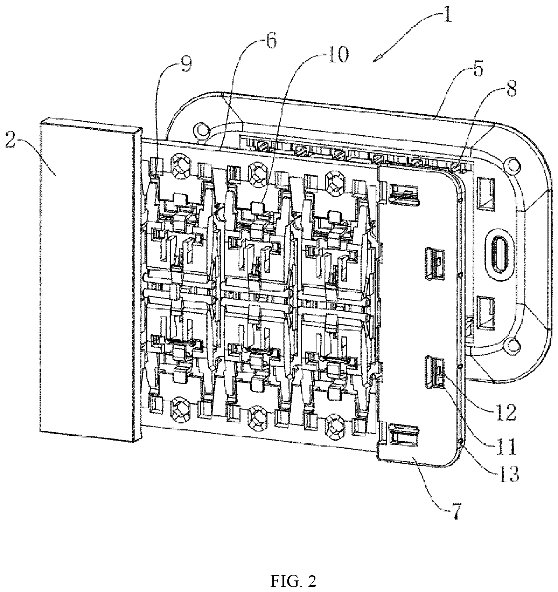

As shown in FIGs. 1 and 2, the modular wall electrical device includes a base 1, a decorative panel 2 connected to the base 1, and a replaceable electrical module 3 positioned on the base 1. The electrical module 3 includes a switch module 4, a socket module, a voice control module, a delay light module, etc.

As shown in FIGs. 1 and 2, the base 1 includes a base frame 5 and two transverse members 6 and two longitudinal members 7 installed on the base frame 5. The two longitudinal members 7 are respectively connected to both ends of the two transverse members 6. The bottom frame 5 is of a frame type, and is defined with installation slots 8 at a side of two edges installed with horizontal components 6 facing a center of the bottom frame 5.

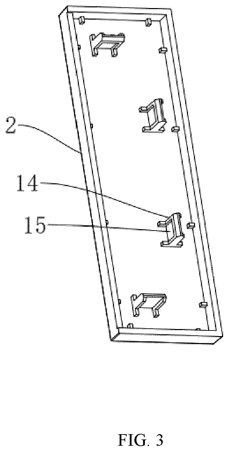

As shown in FIGs. 2 and 3, the transverse member 6 includes multiple module installation units, each of which is formed with two mating grooves 9 facing a center of the base 1 and a positioning slot 10 positioned between the two mating grooves 9. Each of the longitudinal members 7 is defined with four decorative fixing holes 11, of which two decorative fixing holes 11 are positioned near an upper end and a lower end of the longitudinal member 7, and the other two decorative fixing holes 11 are positioned at an end of the longitudinal member 7 departing from the transverse member 6. Each of the decorative fixing holes 11 includes adjacent square hole and oblong hole, and a decorative fixing block 12 is formed on one side of a spacing bar between the square hole and oblong hole facing the square hole. The decorative fixing block 12 is formed with a guiding slope at a side facing the decorative panel 2. There are four interference pressing blocks 13 evenly formed on the side of each of the longitudinal member 7 departing from the transverse member 6 and configured to be in press fixed with the decorative panel 2. A decorative pillar 14 is formed at a position on decorative panel 2 corresponding to the square hole of each of the decorative fixing holes 11, and a decorative fixing groove 15 is formed on a side of each of the decorative pillars 14 and configured to be cooperation fixed with and the decorative fixing block 12.

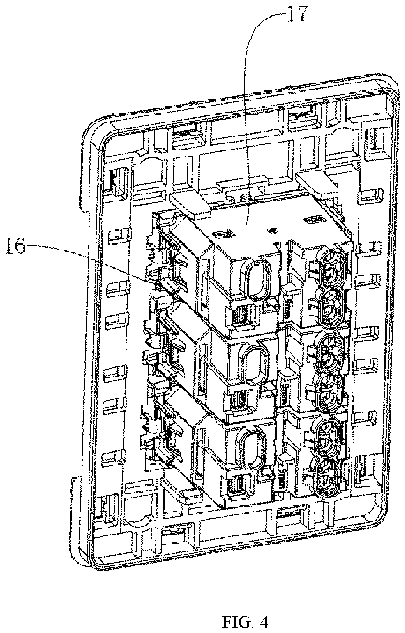

As shown in FIGs. 2 and 4, an installation block 16 is formed on both sides of each of the electrical modules 3 and configured to match the installation slot 8. Before installing the transverse component 6 and longitudinal component 7 on the bottom frame 5, the electrical module 3 is first installed on the bottom frame 5 through the cooperation of the installation block 16 and the installation slot 8.

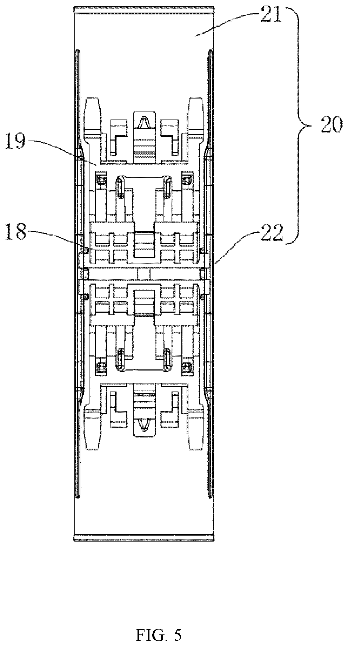

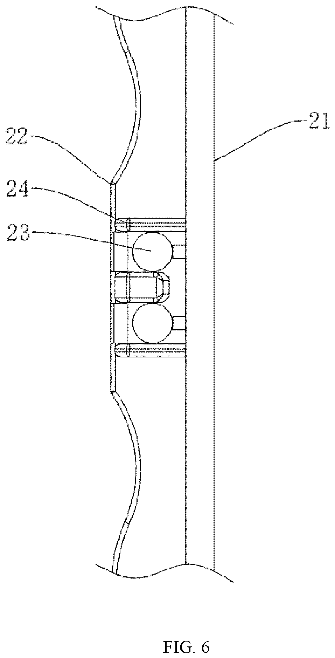

As shown in FIGs. 1, 4, and 5, the switch module 4 includes a press switch 17, a press panel 20 for finger pressing, a touch member 18 installed inside the press panel 20, and a transmission component 19. The installation blocks 16 are formed on both sides of the press switch 17 and configured to match the installation slot 8. The pressing panel 20 includes a panel body 21 and a support edge 22 located at both sides of the panel body 21 and extending in the direction of the base 1. As shown in FIGs. 5 and 6, there are two installation holes 23 defined in the middle of two sides of two support edges 22 facing each other and configured for installing the touch member 18, and two installation holes 23 on a same support edge 22 are distributed along a length direction of the pressing panel 20. A limit protrusion 24 is formed at a position between two installation holes 23 on the same support edge 22, sides of the the two installation holes 23 departing from each other, and a side of the two installation holes 23 facing the panel body 21. A guide slope is formed at a side of each of the installation holes 23 on the support edge 22 departing from the support panel.

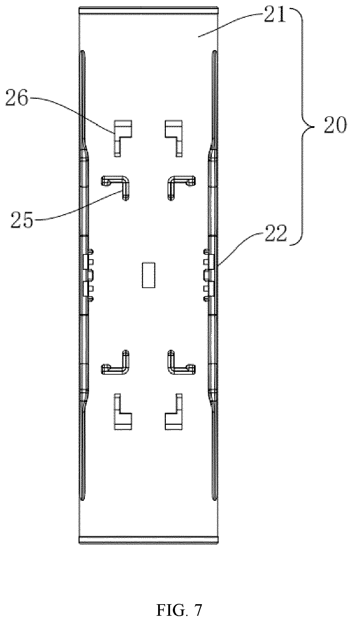

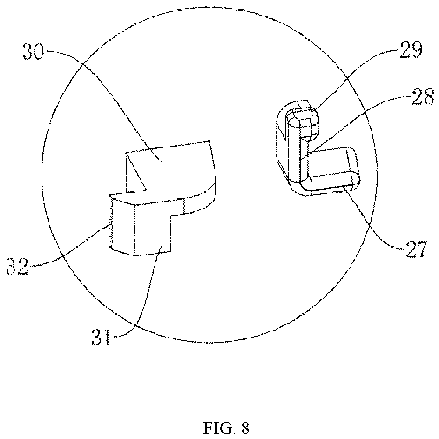

As shown in FIGs. 7 and 8, a first snap part 25 and a second snap part 26 are symmetrically arranged along a centerline of a side of the panel body 21 facing the base 1 in a length direction thereof. The first snap part 25 includes a first reinforcing plate 27 extending along a length direction of the panel body 21, and a first support plate 28 integrally formed with the first reinforcing plate 27 and extending outward along a width direction of the panel body 21. An end of the first support plate 28 is formed with a first snap block 29 at one side departing from the first reinforcing plate 27. The second snap part 26 is closer to the two ends of the panel body 21 compared to the first snap part 25. The snap part includes a second reinforcing plate 30 extending along the length direction of the panel body 21, and a second supporting plate 31 integrated with the second reinforcing plate 30 and extending towards a center direction of the panel along a width direction of the panel body 21. A side of the second supporting plate 31 departing from the second reinforcing plate 30 is formed with a second snap block 32.

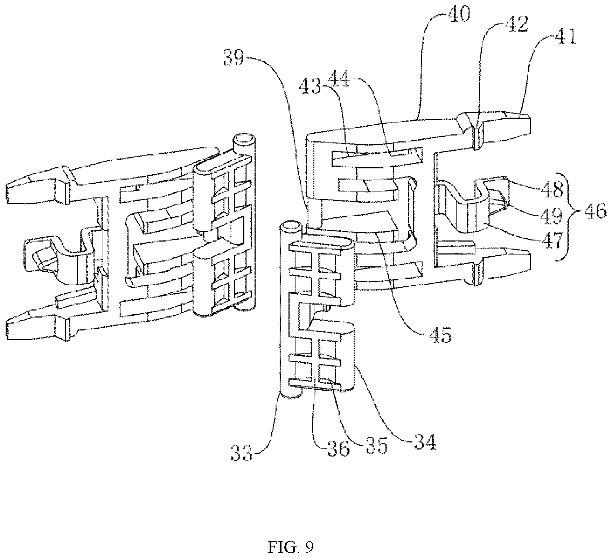

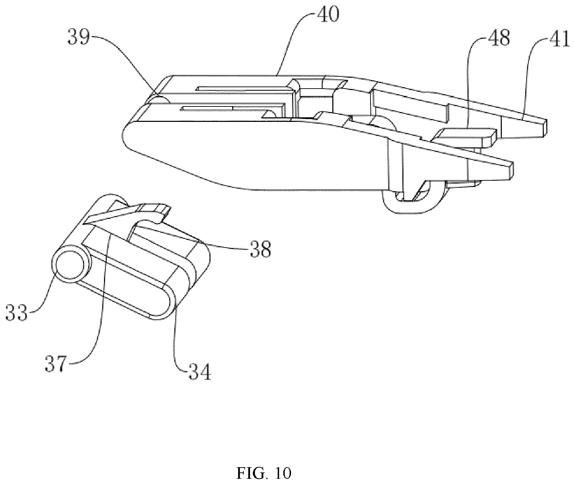

As shown in FIGs. 9 and 10, the touch member 18 includes an installation rod 33 that is adapted to be inserted into two facing installation holes 23 in the support edge 22. One side of the installation rod 33 is integrally formed with a touch plate 34, one side of the touch plate 34 is formed with a material saving groove 35, and a cross reinforcement bracket 36 is formed at a center of the material saving groove 35. A snap bracket 37 is formed at the other side of the touch plate 34, and a first snap-in groove 38 is formed at a side of the snap bracket 37 departing from the installation rod 33. An inner wall of the first snap-in groove 38 departing from the touch plate 34 acts as a snap-in wall, and the snap-in wall tilts from the installation rod 33 and towards the touch plate 34.

As shown in FIGs. 9 and 10, the transmission component 19 includes a snap rod 39 cooperating with the first snap-in groove 38. The snap rod 39 is configured to be snap connected into first snap-in groove 38 and rotated around the first snap-in groove 38 by pressing and deforming the snap rod 39 against the snap-in wall. A transmission rod 40 is formed at sides of two ends of the snap rod 39, respectively, and a connecting rod is integrally formed in the middle of the two transmission rods 40 for connecting the two rods together. An end of the transmission rod 40 departing from the snap rod 39 is formed with an abutting plate 41, and a distance between a side of the abutting plate 41 departing from the panel body 21 and the panel body 21 is smaller than a distance between a side of the transmission rod 40 departing from the panel body 21 and the panel body 21. Surfaces of the transmission rod 40 and the abutting plate 41 at a side facing the panel body 21 gradually tilts away from the panel body 21 from the middle of the transmission rod 40 towards the abutting plate 41. A guide protrusion 42 is formed at the transition joint between the transmission rod 40 and the abutting plate 41 at one side departing from the panel body 21, and a side of the guide protrusion 42 facing the abutting plate 41 tilts towards the transmission rod 40 in a direction departing from the panel body 21. A second snap-in groove 43 is defined in one side of the transmission rod 40 departing from the panel body 21, and a through hole 44 is defined in a bottom surface of the second snap-in groove 43. A width of the through hole 44 is greater than a width of the first snap block 29, and there is a distance left between the through hole 44 and a side wall of the second snap-in groove 43. After the first snap part 25 on the panel body 21 is passed through the through hole 44, the first snap block 29 is snapped and fixed in the second snap-in groove 43 to complete the installation. There is a positioning rod 45 formed on each side of the two transmission rods 40 positioned near the middle of the snap rod 39 on the snap rod 39. When the transmission component 19 is snapped and fixed in the panel body 21, the positioning rod 45 abuts against the side of the first reinforcing plate 27. One side of the connecting rod departing from the snap rod 39 is formed with an elastic abutting member 46, which includes a U-shaped elastic bendable part 47 and an abutting part 48. The abutting part 48 is formed with a positioning block 49 on one side departing from the panel body 21. After the installation of switch module 4 is completed, the abutting plate 41 is inserted into the mating groove 9, and the positioning block 49 is inserted into the positioning slot 10.

Technical solutions according to the present application can combine required electrical modules 3 and fix it on the base 1 according to user's needs for use.

## Claims

1. A modular wall electrical device, **characterized by** comprising a base (1) and one or more replaceable electrical modules (3) positioned on the base (1).

2. The modular wall electrical device according to claim 1, **characterized in that**, the base (1) comprises a base frame (5) and two transverse members (6) and two longitudinal members (7) installed on the base frame (5), the two longitudinal members (7) are respectively connected to two ends of the transverse members (6), and the transverse member (6) comprises multiple module installation units.

3. The modular wall electrical device according to claim 2, **characterized in that**, an installation slot (8) is defined in a side of two side parts of the base frame (5) installed with the transverse member (6) facing a center of the base frame (5), the electrical module (3) comprises a switch module (4), the switch module (4) comprises a press switch (17), a press panel (20) for finger pressing, and a touch member (18) and a transmission component (19) installed in the press panel (20), and two sides of the press switch (17) are formed with installation blocks (16) cooperating with the installation slots (8).

4. The modular wall electrical device according to claim 3, **characterized in that**, the press panel (20) comprises a panel body (21) and a support edge (22) positioned at two sides of the panel body (21) and extending toward the base (1), two installation holes (23) configured for installing the touch member (18) are defined in the middle of two sides of the two support edges (22) facing each other, two installation holes (23) on a same support edge (22) is distributed along a length direction of the press panel (20), first snap parts (25) are symmetrically arranged along a centerline of a side of the panel body (21) facing the base (1) in a length direction, the touch member (18) comprises an installation rod (33) configured to be inserted into two installation holes (23) in two supporting edges (22), one side of the installation rod (33) is integrally formed with a touch plate (34), one side of the touch plate (34) is formed with a snap bracket (37), a first snap-in groove (38) is defined in a side of the snap bracket (37) departing from the installation rod (33), an inner wall of the first snap-in groove (38) departing from the touch plate (34) acts as a snap-in wall, the snap-in wall tilts from the installation rod (33) towards the touch plate (34), the transmission component (19) includes a snap rod (39) configured to be deformed and snapped into the first snap-in groove (38) and rotated around the first snap-in groove (38), sides at two ends of the snap rod (39) are formed with a transmission rod (40) in cooperation with the first snap part (25), one end of the transmission rod (40) departing from the snap rod (39) is formed with an abutting plate (41), each of the module installation units is formed with two mating grooves (9) facing the center of the base (1), and the abutting plate (41) abuts against the mating groove (9).

5. The modular wall electrical device according to claim 4, **characterized in that**, a limit protrusion (24) is defined at a position between two installation holes (23) on a same support edge (22), sides of the two installation holes (23) departing from each other, and a side of the two installation holes (23) facing the panel body (21), respectively.

6. The modular wall electrical device according to claim 4, **characterized in that**, a guide slope is formed along the support edge (22) on one side of each of the installation holes (23) departing from the support panel.

7. The modular wall electrical device according to claim 4, **characterized in that**, the first snap part (25) comprises a first reinforcing plate (27) extending along a length direction of the panel body (21), and a first supporting plate (28) integrally formed with the first reinforcing plate (27) and extending outward along a width direction of the panel body (21), a first snap block (29) is formed on one side of an end of the first supporting plate (28) departing from the first reinforcing plate (27), the transmission rod (40) is defined with a second snap-in groove (43) in one side departing from the panel body (21), a bottom surface of the second snap-in groove (43) is defined with a through hole (44), a width of the through hole (44) is greater than a width of the first snap block (29), and there is a distance between the through hole (44) and a side wall of the second snap-in groove (43), and the first snap block (29) is snapped and fixed in the second snap-in groove (43) after the first snap part (25) on the panel body (21) is passed through the through hole (44).

8. The modular wall electrical device according to claim 4, **characterized in that**, a distance between a side of the abutting plate (41) departing from the panel body (21) and the panel body (21) is less than a distance between a side of the transmission rod (40) departing from the panel body (21) and the panel body (21), and surfaces of the transmission rod (40) and the abutting plate (41) facing the panel body (21) gradually tilts away from the panel body (21) in a direction from the middle of the transmission rod (40) to the abutting plate (41).

9. The modular wall electrical device according to claim 4, **characterized in that**, each of the module installation unit is formed with a positioning groove (10) located in the middle of two docking grooves (9), one side of the connecting rod departing from the snap rod (39) is formed with an elastic abutting member (46), the elastic abutting member (46) comprises a U-shaped elastic bendable part (47) and an abutting part (48), and one side of the abutting part (48) departing from the panel body (21) is formed with a positioning block (49).

10. The modular wall electrical device according to claim 2, **characterized by** further comprising a decorative panel (2) connected to a base (1), wherein the longitudinal component (7) is formed with multiple decorative fixing holes (11), each of the decorative fixing holes comprises adjacent square hole and oblong hole, a decorative fixing block (12) is formed on one side of a spacing bar between the square hole and the oblong hole facing the square hole, a guide slope is formed on a side of the decorative fixing block (12) facing the decorative panel (2), a decorative insertion column (14) is formed on the decorative panel (2) at positions corresponding to the square holes of the decorative fixing hole (11), and a decorative fixing groove (15) is defined in a side of each of the decorative insertion columns (14) and configured for fixing and cooperating with the decorative fixing block (12).
